# EUROPEAN PATENT APPLICATION

(11) **EP 1 642 705 A1**
(43) Date of publication of application: **05.04.2006**
(21) Application number: 04745659.5
(22) Date of filing: 08.06.2004
(51) Int. Cl.: B29D 30/30, B60C 5/14, B29C 47/00, B29C 55/28

(54) **METHOD OF FEEDING TIRE STRUCTURE MEMBER**

(30) Priority: 13.06.2003 JP 2003168733
(71) Applicant: THE YOKOHAMA RUBBER CO., LTD., Tokyo 105-8685 (JP)
(72) Inventor: KANENARI, Daisuke; c/o The Yokohama Rubber Co.,, Kanagawa;2548601 (JP)
(74) Representative: HOFFMANN EITLE
(86) International application number: PCT/JP2004/007949
(87) International publication number: WO 2004/110735

(57) **Abstract**

A method of feeding a tire component according to the present invention comprises: winding in rolls tubular films formed of thermoplastic elastomer obtained by blending thermoplastic resin and rubber to form rolled bodies having sizes corresponding to different nominal rim diameters of tires; unwinding the tubular film from the rolled body corresponding to a nominal rim diameter of a green tire when the green tire is built, and cutting the unwound tubular film so as to form a piece having a necessary width corresponding to a size of the green tire to form a tire component; and feeding the tire component to a tire building machine.

## Description

### TECHNICAL FIELD

The present invention relates to a method of feeding a tire component, and more specifically, to a method of feeding a tire component that can facilitate managing stocked intermediates for tire components and improve productivity.

### TECHNICAL BACKGROUND

In general, a green tire is built in such a manner that tire components are respectively fed to the drum of a tire building machine, where the tire components are sequentially applied onto the drum.

Normally, tire components such as inner liners or carcass plies are formed by initially producing a belt-like whole layer of a continuous length as an intermediate for the tire components and then cutting it into pieces having predetermined lengths. The tire components are different in width even if they are used for tires having the same nominal rim diameters when the tires have different tire sizes (nominal cross-sectional width and nominal aspect ratio). Therefore, it is required that belt-like whole layers having different widths corresponding to different tire sizes be prepared as intermediates for the tire components, and be stocked (see Japanese patent application *Kokai* publication No. 2000-33656, for example).

On the other hand, pneumatic tires obtained by molding and curing green tires are different in material and in structure depending on car models and brands for which they are intended even when they have the same size. Therefore, it is required that intermediates for tire components corresponding to such differences be prepared, and be stocked.

As a consequence, stock management is required for a large number of intermediates for tire components, whereby an operation for managing the intermediates is complicated. Moreover, a setup-change operation for changing a bobbin around which an intermediate is wound up, is required every time the size of tires to be produced is changed, and the frequency thereof is high, which prohibits enhancement in productivity.

### DISCLOSURE OF THE INVENTION

An object of the present invention is to provide a method of feeding a tire component in which stock management of intermediates for tire components can be facilitated while productivity can be enhanced.

In order to achieve the above object, the present invention provides a method of feeding a tire component, comprising the steps of: winding in rolls tubular films formed of thermoplastic elastomer obtained by blending thermoplastic resin and rubber to form rolled bodies having sizes corresponding to different nominal rim diameters of tires; unwinding the tubular film from the rolled body corresponding to a nominal rim diameter of a green tire when the green tire is built, and cutting the unwound tubular film so as to form a piece having a necessary width corresponding to a size of the green tire to form a tire component; and feeding the tire component to a tire building machine.

As described above, since the tubular films having sizes corresponding to different nominal rim diameters are taken up to form the rolled bodies, and when a green tire is built, the tubular film unwound from the rolled body corresponding to the nominal rim diameter of the green tire is cut to form a piece having a necessary width corresponding to the size of the tire, it is not necessary to prepare rolled bodies corresponding to the sizes of tires having different width measurements, and it suffices to prepare, as an intermediate for the tire components, one type of rolled body corresponding to each nominal rim diameter. Therefore, the number of the types of the intermediates for the tire components to be stored can be considerably reduced, facilitating management of storing the intermediates for the tire components.

If tires have the same nominal rim diameters, even though the tires are different in size, it is possible to accommodate the tires by changing the cut width of the tubular film. Therefore, it is possible to reduce the frequency of performing setup-change operations, whereby productivity can be enhanced.

### BRIEF DESCRIPTION OF THE DRAWINGS

Fig. 1 is an illustration showing processes until a thermoplastic elastomer material is formed into a rolled body formed from a tubular film by means of tubular film extrusion in a first embodiment of a tire component feeding method according to the present invention.
Fig. 2 is an illustration showing processes until rolled bodies are cut and fed to tire building machines in the first embodiment of a tire component feeding method according to the present invention.
Fig. 3 is an illustration showing a process of applying an adhesive in the first embodiment of a tire component feeding method according to the present invention.
Fig. 4 is an illustration showing processes until a thermoplastic elastomer material is formed into a rolled body formed from a tubular film by means of tubular film extrusion in a second embodiment of a tire component feeding method according to the present invention.
Fig. 5 is a partial cross-sectional view showing a tubular film with an adhesive layer, formed in the processes in Fig. 4.
Fig. 6 is an illustration showing other processes until rolled bodies are cut and fed to a tire building machine in the embodiments of a tire component feeding method according to the present invention.

### BEST MODES FOR CARRYING OUT THE INVENTION

Embodiments of the present invention will be described below in detail with reference to the attached drawings. Like reference characters refer to like elements, and duplicated explanation will be omitted.

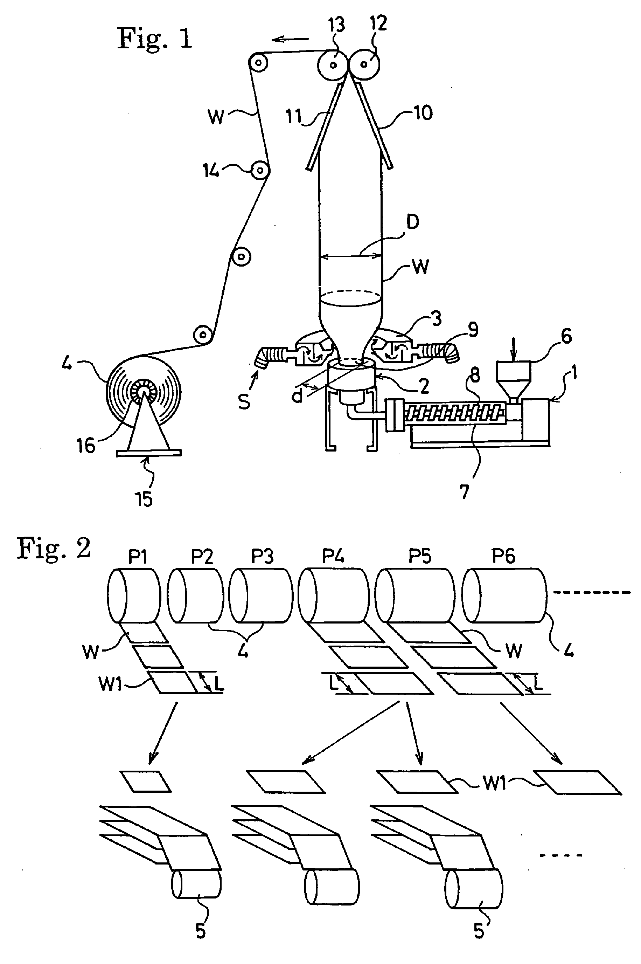

In Figs. 1 and 2, reference numeral 1 denotes a single screw extruder, reference numeral 2 denotes a circular die attached to the extrusion opening of the single screw extruder 1, reference numeral 3 denotes an air ring for cooling by air a tubular film W extruded through the circular die 2, reference numeral 4 denotes a rolled body obtained by taking up the tubular film W in a roll, reference numeral 5 denotes a building drum (a tire building machine), and reference character W1 denotes a tire component. The tire component W1 is formed of thermoplastic elastomer formed by dispersing rubber components in a thermoplastic resin component, and is preferably used as an inner liner disposed inside a pneumatic tire.

The method of feeding a tire component according to the present invention will be performed as follows.

First, a thermoplastic elastomer material formed by blending thermoplastic resin and rubber is fed into the hopper 6 of the single screw extruder 1 as indicated by an arrow. This thermoplastic elastomer material is a resultant of kneading a thermoplastic resin material and a rubber material having predetermined compounding ratios in advance by use of a twin screw extruder or the like, and has a structure in which the components of the rubber are dispersed in the component of the thermoplastic resin.

The thermoplastic elastomer material fed into the hopper 6 is forwarded to the circular die 2 by a screw 8 rotating in the cylinder 7 of the single screw extruder 1 while being kneaded and melt, and is extruded as a tubular film W through the lip opening 9 of the circular die 2. The extruded tubular film W is expanded in a cylindrical shape by use of compressed air sent from the central portion of the lip opening 9 until the shape assumes a predetermined diameter D. Cooling air S from the air ring 3 is blown toward the expanding tubular film W, so that the tubular film W is cooled.

The tubular film W which has been cooled and expanded to the predetermined diameter D is folded in a sheet shape through a pair of guiding members 10 and 11 and through a pair of nip rolls 12 and 13. The folded tubular film W is rolled about a bobbin 16 of a winding machine 15 after passing through a plurality of guide rolls 14, and a rolled body 4 formed by taking up the tubular film W around the bobbin 16 is formed.

The above-described method of forming the tubular film W is a method called tubular film extrusion.

By use of this tubular film extrusion, rolled bodies 4 corresponding to the different nominal rim diameters of tires, that is, rolled bodies 4 formed from tubular films W the diameters D of which are different correspondingly to sizes indicated by the nominal rim diameters are prepared, respectively. For typical pneumatic tires, their measurements indicated by nominal rim diameters are in one inch (25.4 mm) increments in such a manner that the diameters are ten inches (254 mm), eleven inches (279.4 mm), twelve inches (304.8 mm), and so on. In a case where pneumatic tires manufactured in a certain factory have sizes indicated by nominal rim diameters, ranging from ten inches to twenty-five inches in diameter, for example, it suffices to form sixteen types of rolled bodies 4 formed from tubular films W having diameters D that vary in one inch increments from ten inches.

Tubular films W with different diameters D are formed by adjusting the amount of compressed air sent from the central portion of the lip opening 9 to change the expansion ratios of the tubular films W. Furthermore, by adjusting the revolution speed of the screw 8 (discharge rate) and the amount of air sent from the air ring 6, for example, the tubular films W having predetermined thicknesses are formed.

The rolled bodies 4 that have been formed are stored in a state where they are wound about bobbins 16 until they are in use. It is desirable to store the rolled bodies in one storage place to facilitate management thereof; however, they may be stored in a plurality of places, due to space of the storage places.

When in use, as shown in Fig. 2, the rolled bodies 4 taken up around the bobbins 16 in a storage place are mounted on unwinding units (not shown) located at feeding positions P1, P2, P3, P4, P5, P6, and so on for different nominal rim diameters to feed them to building drums 5, respectively.

When building of green tires is started with the building drums 5, the tubular films W, which are unwound from the rolled bodies 4 having sizes corresponding to the nominal rim diameters of the green tires and are sheet-shaped, are cut into pieces having necessary widths L corresponding to the sizes of the tires, whereby tire components W1 are formed. The tire components W1 are automatically fed to the building drums 5 after passing through conveyance passages (not shown). The tire components W1 that have been fed are mounted on the outer peripheries of the building drums 5 in a state where the tire components W1 are made cylindrical by operators or by means of installing units.

According to the present invention described above, the tubular films W having sizes corresponding to different nominal rim diameters are wound to form the rolled bodies 4, and when a green tire is built, the tubular film W unwound from the rolled body 4 corresponding to the nominal rim diameter of the green tire is cut to form a piece having a necessary width L corresponding to the tire size. Thereby, it becomes unnecessary to prepare rolled bodies 4 corresponding to respective tire sizes having different width measurements, and it suffices to prepare, as intermediates for the tire components W1, the roll bodies 4 corresponding to different nominal rim diameters the variations of which are far less than the variations of tire sizes. Therefore, the number of the intermediates for tire components W1 to be stored can be greatly reduced, which facilitates managing the stored intermediates for the tire components W1.

If tires have the same nominal rim diameter, even though the tires are different in size, it suffices to vary a cut width. Therefore, a tubular film W unwound from the same rolled body 4 can be used for those tires. Consequently, the frequency of performing setup-change operations is reduced, and enhancement in productivity thus becomes possible.

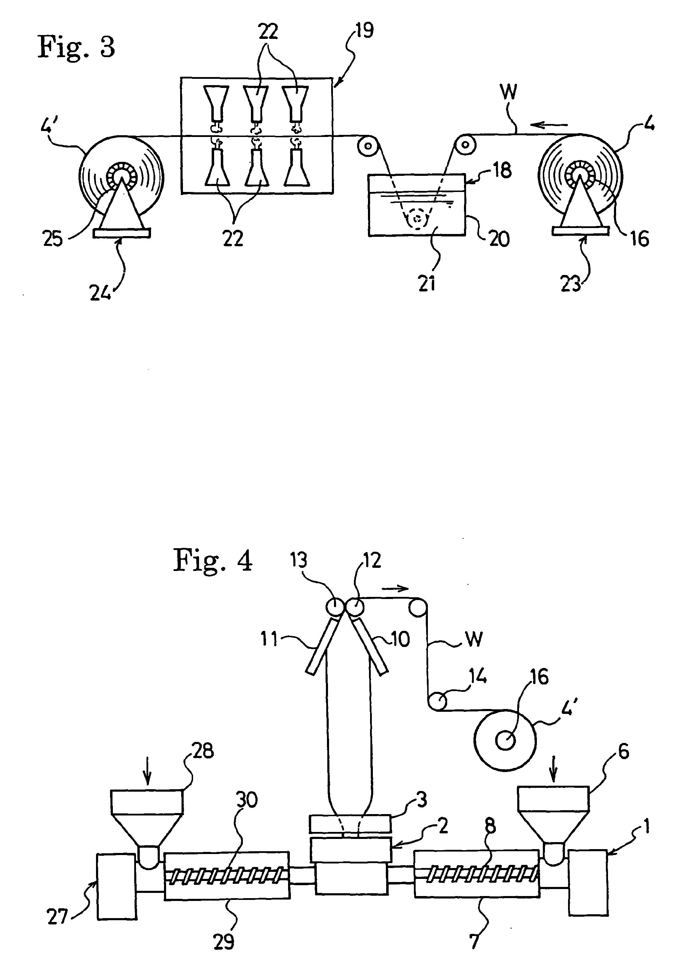

In the tire component feeding method of the present invention described above, it is advantageous to additionally provide a process of applying an adhesive as shown in Fig. 3. In Fig. 3, reference numeral 18 denotes adhesive application means for applying an adhesive onto the outer surface of a folded tubular film W, and reference numeral 19 denotes drying means for drying the applied adhesive.

The adhesive application means 18 has a container 20 accommodating adhesive solution 21. The drying means 19 includes at the upper and lower sides thereof a plurality of air blowing units 22 that blow air for drying.

In this adhesive application process, the bobbin 16 having a rolled body 4 prepared in the processes shown in Fig. 1 is attached to a unwinding machine 23, and the folded tubular film W is unwound from the bobbin 16 to be successively dipped in the adhesive solution 21 in the container 20, thereby attaching the adhesive to the outer surface of the film W. The adhesive attached film W is then forwarded to the drying means 19, where the adhesive attached film W is successively dried by air supplied from the air blowing units 22. The film W having the adhesive dried is taken up around a bobbin 25 of a winding machine 24 to form a rolled body 4' including the adhesive on the outer surface. Thereafter, as described above, the tire component W1 is formed to be fed automatically to the building drum 5.

Adhesion of the thermoplastic elastomer with rubber is weaker than adhesion of rubber with rubber. For this reason, in order to secure excellent adhesion of the tire component W1 with another tire component to be attached on the outer surface of the tire component, it is preferable that the adhesive is applied onto the outer surface of the film W as described above to allow the tire component W1 to have an adhesive layer on the outer surface.

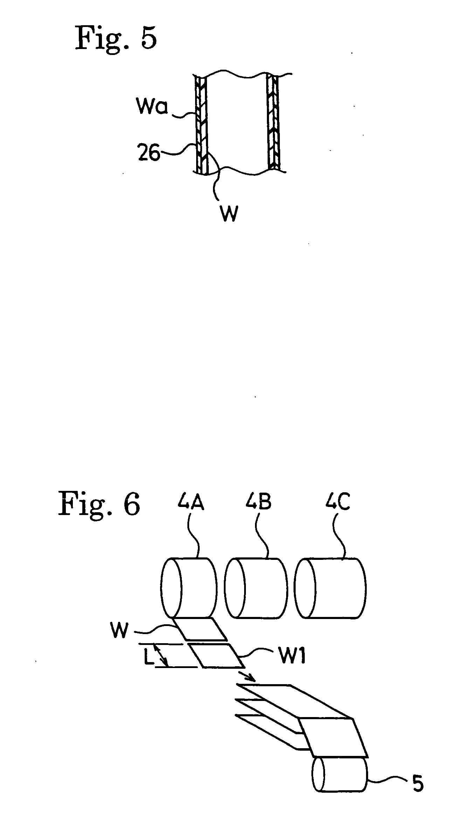

Fig. 4 shows another embodiment of a tire component feeding method according to the present invention, in which two layers having a tubular film W and an adhesive layer 26 (see Fig. 5) are simultaneously formed by being extruded through the circular die 2. The same elements as in the above embodiment are referred by the same reference characters, and duplicated explanation will be omitted.

In this embodiment shown in Fig. 4, a single screw extruder 27 for extruding an adhesive is additionally connected to the circular die 2. An adhesive material put into a cylinder 29 through the hopper 28 of the single screw extruder 27 is forwarded to the circular die 2 by a screw 30 while being kneaded and melt. At the same time when the tubular film W is extruded through the lip opening 9 of the circular die 2, the adhesive layer 26 is also extruded onto the surface Wa of the tubular film W, whereby the tubular film W having the adhesive layer 26 on the surface Wa is formed by extrusion. Cooling air from the air ring 3 is applied to cool the tubular film W and the adhesive layer 26.

Thereafter, as in the embodiment shown in Fig. 1, the tubular film W having the adhesive layer 26 is successively wound up around the bobbin 16 to be formed into a rolled body 4' having the adhesive layer 26 on the outer surface Wa. This rolled body 4' is formed into tire components W1, as described above, which are automatically fed to building drums 5.

In light of productivity, it is preferable to thus form the tubular film W and the adhesive layer 26 simultaneously.

In the above embodiments of the present invention, the rolled bodies 4 are temporarily stored; however, the rolled bodies 4 may be mounted on the unwinding units provided at the feeding positions without storage if the unwinding units allow for mounting of the rolled bodies 4.

When green tires having previously specified different nominal rim diameters are built with each building drum 5, the tire component W1 may be formed such that rolled bodies 4A, 4B and 4C corresponding to the nominal rim diameters of the tires to be built are mounted on unwinding units (not shown) arranged in the vicinity of each building drum 5 and, when each green tire is built, the tubular film W unwound from the rolled body corresponding to the nominal rim diameter of the each green tire, arranged in the vicinity, is cut to form a piece having a necessary width L corresponding to the tire size.

As the thermoplastic resin used for the thermoplastic elastomer of which the tire component W1 is formed, polyamide resin such as nylon 6 and nylon 66, polyester resin such as polybutylene terephthalate and polyethlene terephthalate, polynitrile resin such as polyacrylonitrile and polymethacrylonitrile, polymethacrylate resin such as polymethyl methacrylate and polyethyl methacrylate, polyvinyl resin such as vinyl acetate and polyvinyl alcohol, cellulose resin such as cellulose acetate, fluororesin such as polyvinylidene fluoride and polyvinyl fluoride, ands imide resin such as aromatic polyimide, for example, can be mentioned as preferred examples.

As the rubber used for the thermoplastic elastomer, diene rubber such as natural rubber and isoprene rubber, olefin rubber such as ethylene propylene rubber (EPM or EPDM), isobutylene rubber such as halogenated butyl rubber and a halide of isobutylene-p-methylstyrene, halogen-containing rubber such as chloroprene rubber and hydrin rubber, silicon rubber such as methyl vinyl silicon rubber and dimethyl silicon rubber, sulfur-containing rubber such as polysulfide rubber, and fluororubber such as vinylidene fluoride rubber, for example, may be mentioned as preferred examples.

While preferred embodiments of the tire component feeding method has hereinabove been described, it will be understood that the present invention is not limited to the above embodiments but covers all modifications as may be included within the scope of the invention as defined by the appended claims.

### INDUSTRIAL APPLICABILITY

The tire component feeding method of the present invention having the aforementioned advantageous effects can be very effectively used in the processes of manufacturing a pneumatic tire.

## Claims

1. The method of feeding a tire component, comprising the steps of:
winding in rolls tubular films formed of thermoplastic elastomer obtained by blending thermoplastic resin and rubber to form rolled bodies having sizes corresponding to different nominal rim diameters of tires;
unwinding the tubular film from the rolled body corresponding to a nominal rim diameter of a green tire when the green tire is built, and cutting the unwound tubular film so as to form a piece having a necessary width corresponding to a size of the green tire to form a tire component; and
feeding the tire component to a tire building machine.

2. The method of feeding a tire component according to claim 1, wherein the tubular films are formed by means of tubular film extrusion.

3. The method of feeding a tire component according to any one of claims 1 and 2, wherein the tubular films are wound up in rolls after an adhesive is applied to an outer surface of each of the tubular films.

4. The method of feeding a tire component according to claim 3, wherein each tubular film and a layer of the adhesive are simultaneously formed by extrusion.

5. The method of feeding a tire component according to any one of claims 1 and 2, comprising the step of unwinding the tubular films from the rolled bodies wound in rolls to apply an adhesive to an outer surface of each of the tubular films, drying the adhesives and rewinding the tubular films with the adhesives in rolls to form adhesive-attached rolled bodies.

6. The method of feeding a tire component according to any one of claims 1 to 5, comprising the step of storing the rolled bodies in at least one storage place until the rolled bodies are in use after formation of the rolled bodies.

7. The method of feeding a tire component according to any one of claims 1 to 6, wherein the tire building machine is a tire building machine which builds green tires having previously specified different nominal rim diameters, the rolled bodies corresponding to the different nominal rim diameters being placed near the tire building machine, the tire component being formed such that, when a green tire is built, the tubular film unwound from the rolled body corresponding to the nominal rim diameter of the green tire, placed near the tire building machine, is cut so as to form a piece having a necessary width corresponding to a size of the green tire.

8. The method of feeding a tire component according to any one of claims 1 to 7, wherein the thermoplastic elastomer comprises a component of the thermoplastic resin and components of the rubber dispersed therein.

9. The method of feeding a tire component according to any one of claims 1 to 8, wherein the tire component is an inner liner.
